# EUROPEAN PATENT APPLICATION

(11) **EP 4 668 087 A1**
(43) Date of publication of application: **24.12.2025**
(21) Application number: 24756252.3
(22) Date of filing: 07.02.2024
(51) Int. Cl.: G06F 3/04845, G06F 3/0481

(54) **INTERACTION METHOD AND APPARATUS, ELECTRONIC DEVICE, AND STORAGE MEDIUM**

(30) Priority: 17.02.2023 CN 202310181170
(71) Applicant: Beijing Zitiao Network Technology Co., Ltd., Beijing 100190 (CN)
(72) Inventor: XU, Shan, Beijing 100028 (CN); WANG, Yingke, Beijing 100028 (CN); ZHANG, Yu, Beijing 100028 (CN); TENG, Huaihong, Beijing 100028 (CN)
(74) Representative: Isarpatent
(86) International application number: PCT/CN2024/076710
(87) International publication number: WO 2024/169879

(57) **Abstract**

Provided in the embodiments of the present disclosure are an interaction method and apparatus, an electronic device, and a storage medium. The method comprises: receiving an attribute copying operation directed at a preset attribute of a first avatar, the first avatar being an avatar of a first user; in response to the attribute copying operation, obtaining first attribute information of the first avatar, wherein the first attribute information is the attribute information of the preset attribute, the obtained first attribute information is used for being provided to a second avatar for use, the second avatar is an avatar of a second user, and the second user is the user executing the attribute copying operation.

## Description

### CROSS-REFERENCE TO RELATED APPLICATIONS

The present application is based on and claims priority to China Patent Application No. 202310181170.3 filed on February 17, 2023, the disclosure of which is incorporated by reference herein in its entirety.

### TECHNICAL FIELD

The embodiments of the disclosure relate to the technical field of computers, and in particular, to an interaction method and apparatus, an electronic device, and a storage medium.

### BACKGROUND

Currently, in some applications, a user may create an virtual character and dress the created virtual character with clothing provided in the applications. However, in the related art, a way of dressing the virtual character is relatively simple.

### SUMMARY

The embodiments of the disclosure provide an interaction method and apparatus, an electronic device and a storage medium, to enrich the way of dressing an virtual character.

In a first aspect, an embodiment of the present disclosure provides an interaction method, comprising:
receiving an attribute copying operation for a preset attribute of a first virtual character, wherein the first virtual character is an virtual character of a first user; and obtaining first attribute information of the first virtual character for use of a second virtual character in response to the attribute copying operation, wherein the first attribute information is attribute information of the preset attribute, the second virtual character is an virtual character of a second user, and the second user is a user performing the attribute copying operation.

In a second aspect, an embodiment of the present disclosure further provides an interaction apparatus, comprising: an operation receiving module configured to receive an attribute copying operation for a preset attribute of a first virtual character, wherein the first virtual character is an virtual character of a first user; and an information obtaining module configured to obtain first attribute information of the first virtual character for use of a second virtual character in response to the attribute copying operation, wherein the first attribute information is attribute information of the preset attribute, the second virtual character is an virtual character of a second user, and the second user is a user performing the attribute copying operation.

In a third aspect, an embodiment of the present disclosure further provides an electronic device, comprising: one or more processors; and a memory configured to store one or more programs which, when executed by the one or more processors, cause the one or more processors to implements the interaction method according to the embodiments of the present disclosure.

In a fourth aspect, an embodiment of the present disclosure further provides a computer-readable storage medium having stored thereon computer instructions which, when executed by a processor, implements the interaction method according to the embodiments of the present disclosure.

In a fifth aspect, an embodiment of the present disclosure further provides a computer program comprising: instructions which, when executed by a processor, implement the interaction method according to the embodiments of the present disclosure.

In a sixth aspect, an embodiment of the present disclosure further provides a computer-readable storage medium having thereon stored computer instructions which, when executed by a processor, implements the interaction method according to the embodiments of the present disclosure.

According to the interaction method and apparatus, the electronic device and the storage medium provided by the embodiments of the disclosure, an attribute copying operation for a preset attribute of a first virtual character is received, wherein the first virtual character is an virtual character of a first user; and first attribute information of the first virtual character is obtained in response to the attribute copying operation, wherein the first attribute information is attribute information of the preset attribute of the first virtual character, the first attribute information obtained is for use of a second virtual character of a second user, and the second user is a user performing the attribute copying operation.

### BRIEF DESCRIPTION OF THE DRAWINGS

The above and other features, advantages, and aspects of the embodiments of the present disclosure will become more apparent by referring to the following detailed description when taken in conjunction with the accompanying drawings. Throughout the drawings, the same or similar reference numbers refer to the same or similar elements. It should be understood that the drawings are schematic and that elements and components are not necessarily drawn to scale.
Fig. 1 is a schematic flowchart of an interaction method provided by an embodiment of the present disclosure;
Fig. 2 is a schematic display diagram of copying prompt information provided by an embodiment of the present disclosure;
Fig. 3 is a schematic flowchart of another interaction method provided by the embodiment of the present disclosure;
Fig. 4 is a schematic display diagram of an virtual character provided by an embodiment of the present disclosure;
Fig. 5 is a schematic display diagram of a target control provided by an embodiment of the present disclosure;
Fig. 6 is a block diagram of an interaction apparatus provided by an embodiment of the present disclosure;
Fig. 7 is a schematic structural diagram of an electronic device provided by an embodiment of the present disclosure.

### DETAILED DESCRIPTION

The embodiments of the present disclosure will be described in more detail below with reference to the accompanying drawings. While certain embodiments of the present disclosure are shown in the drawings, it should be understood that the present disclosure may be embodied in various forms and should not be construed as limited to the embodiments set forth herein, but rather, these embodiments are provided for a more complete and thorough understanding of the present disclosure. It should be understood that the drawings and the embodiments of the present disclosure are for illustration purposes only and are not intended to limit the scope of the present disclosure.

It should be understood that the various steps recited in method embodiments of the present disclosure may be performed in a different order, and/or performed in parallel. Moreover, the method embodiments may comprise additional steps and/or omit performing the illustrated steps. The scope of the present disclosure is not limited in this respect.

The term "comprise" and variations thereof as used herein are intended to be open-ended, i.e., "comprising but not limited to". The term "based on" is "based at least in part on". The term "one embodiment" means "at least one embodiment"; the term "another embodiment" means "at least one additional embodiment"; and the term "some embodiments" means "at least some embodiments". Relevant definitions for other terms will be given in the following description.

It should be noted that the terms "first", "second", and the like in the present disclosure are only used for distinguishing different devices, modules or units, and are not used for limiting the order or interdependence of the functions performed by the devices, modules or units.

It is noted that references to "a" or "an" in the present disclosure are intended to be illustrative rather than limiting, and those skilled in the art will appreciate that they should be understood as "one or more" unless the context clearly indicates otherwise.

The names of messages or information exchanged between devices in the embodiments of the present disclosure are for illustrative purposes only, and are not intended to limit the scope of the messages or information.

It is understood that, before the technical solutions disclosed in the embodiments of the present disclosure are used, the user should be notified of the type, use range, use scene, etc. of personal information related to the present disclosure in a proper manner according to relevant laws and regulations and the authorization of the user should be obtained.

For example, in response to receiving an active request from the user, a prompt information is sent to the user to explicitly prompt the user that the requested operation to be performed would require acquisition and use of personal information of the user. Thus, the user can autonomously select whether to provide the personal information to software or hardware such as an electronic device, an application, a server, or a storage medium that performs operations of the technical solutions of the present disclosure, according to the prompt information.

As an alternative but non-limiting implementation, in response to receiving an active request from the user, the way of sending the prompt information to the user may be, for example, a pop-up window, and the prompt information may be presented in a text way in the pop-up window. In addition, a selection control for providing the personal information to the electronic device for the user to select "agree" or "disagree" can be carried in the pop-up window.

It is understood that the above notification and user authorization process is only illustrative and is not intended to limit the implementations of the present disclosure, and other ways of meeting the relevant laws and regulations may be applied to the implementations of the present disclosure.

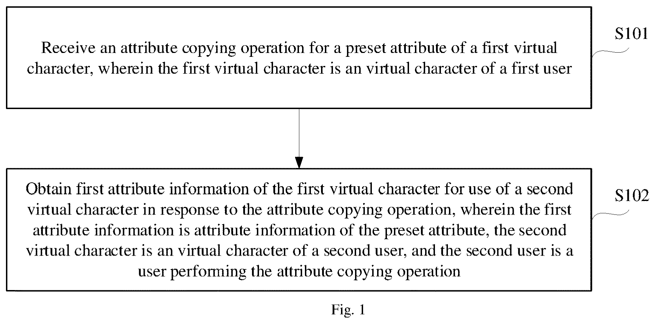

Fig. 1 is a schematic flowchart of an interaction method provided by an embodiment of the present disclosure. The method may be performed by an interaction apparatus, wherein the interaction apparatus may be implemented by software and/or hardware, may be configured in an electronic device, and typically, may be configured in a mobile phone or a tablet computer. The interaction method provided by the embodiment of the disclosure is suitable for a scene for setting a preset attribute of an virtual character, and particularly for a scene for setting the dressing of an virtual character. As shown in Fig. 1, the interaction method provided by the embodiment may comprise the following steps.

In step S101, an attribute copying operation for a preset attribute of a first virtual character is received, wherein the first virtual character is an virtual character of a first user.

The preset attribute may be a certain attribute of an virtual character, such as a dressing attribute of the virtual character. The attribute copying operation may be a trigger operation for instructing to copy attribute information of a preset attribute of an virtual character, such as a trigger operation for instructing to obtain attribute information of a preset attribute of an virtual character. For example, the attribute copying operation may be an operation of triggering a corresponding control or a preset gesture operation. The first virtual character may be an virtual character corresponding to the attribute copying operation, in other words, the first virtual character may be an virtual character instructed by the attribute copying operation to acquire the attribute information of its preset attribute, and may be an virtual character created by the first user. The first user may be a user to which the first virtual character belongs, and in some embodiments, the first user and a current user performing the attribute copying operation may be a same user or different users.

For example, when the current user wants to adopt attribute information that is the same as a preset attribute of an virtual character of another user, the attribute copying operation may be performed. Accordingly, a current application may receive the attribute copying operation performed by the current user. It can be understood that, in the case where they are different users, the first user may have a preset association relationship, for example, a friend relationship, with the current user performing the attribute copying operation.

In step S102, first attribute information of the first virtual character for use of a second virtual character is obtained in response to the attribute copying operation, wherein the first attribute information is attribute information of the preset attribute, the second virtual character is an virtual character of a second user, and the second user is a user performing the attribute copying operation.

The first attribute information may be understood as attribute information of a preset attribute of the first virtual character. The second user may be the current user, i.e. the user performing the above attribute copying operation. The second virtual character may be an virtual character using the first attribute information obtained. The second virtual character is an virtual character of a second user. The second virtual character is a different virtual character from the first virtual character, e.g., the first virtual character and the second virtual character may be different virtual characters of the same user, or virtual characters of different users. At this time, the first user and the second user may be a same user or different users. For example, the first user may obtain attribute information of a preset attribute of an virtual character created by himself by performing an attribute copying operation, to be used by another virtual character created by himself; and/or, obtain attribute information of a preset attribute of an virtual character of another user by performing an attribute copying operation, to be used by the virtual character created by himself. The following description will be given by taking an example that the first user and the second user are different users.

Specifically, when an attribute copying operation for a preset attribute of a first virtual character is received, first attribute information of the preset attribute of the first virtual character may be obtained in response to the attribute copying operation, to be used by a second virtual character. For example, after the first attribute information is obtained, the first attribute information may be saved, so as to use the saved first attribute information as attribute information of a preset attribute of the second virtual character when needed; or, after the first attribute information is obtained, attribute information of a preset attribute of the second virtual character may also be set as the first attribute information.

In this embodiment, the user may obtain attribute information of a preset attribute of an virtual character (i.e., the first virtual character) as attribute information of a preset attribute of another virtual character (i.e., the second virtual character), i.e., the user may directly copy the attribute information of the preset attribute of the first virtual character for use, without the need of setting attribute items of the preset attribute of the second virtual character one by one according to information of attribute items of the preset attribute of the first virtual character. Taking the preset attribute being a dressing attribute as an example, when the user likes the dressing of a first virtual character, the user can copy clothing of the first virtual character by performing the attribute copying operation, so as to dress the second virtual character of the user, and without the need of setting a top, a skirt, a cap, gloves, shoes, accessories and the like of the second virtual character one by one. Therefore, the setting of the preset attribute of the virtual character can be enriched, and the operation required for setting or modifying the preset attribute of the virtual character is simplified.

It is understood that the user can authorize, as needed, whether other users are allowed to copy the attribute information of the preset attribute of the virtual character of the user. That is, only when the first user authorizes and allows other users to copy the attribute information of the preset attribute of the virtual character of the user, the attribute copying operation of the second user is responded. In some embodiments, the first user may set, in an application setting item, authorization information of copying the attribute information of the preset attribute of the virtual character of the user.

In some embodiments, when a user (i.e., a second user) obtains attribute information of a preset attribute of another user (i.e., the first user) by performing the attribute copying operation, copying prompt information may be further sent to the other user, to prompt, through the copying prompt information, the second user that the first user has copied the attribute information of the preset attribute of his virtual character. At this time, in some embodiments, the interaction method provided by the embodiment further comprises: triggering to send copying prompt information to the first user in response to the attribute copying operation.

The copying prompt information may be information for prompting a user that attribute information of a preset attribute of the virtual character of the user is obtained. In some embodiments, the first user may also confirm whether the attribute information copying operation of the second user is authorized, based on the copying prompt information.

In the above embodiment, the copying prompt information may be displayed in a form of system notification information within a notification interface of an application corresponding to the second user; and may also be displayed in a chat interface of the second user and the first user, such as in a form of chat information or non-chat information, so that both the second user and the first user can see the copying prompt information, and the interaction between the first user and the second user is enriched. At this time, in some embodiments, the copying prompt information is displayed within a chat interface of the first user and the second user.

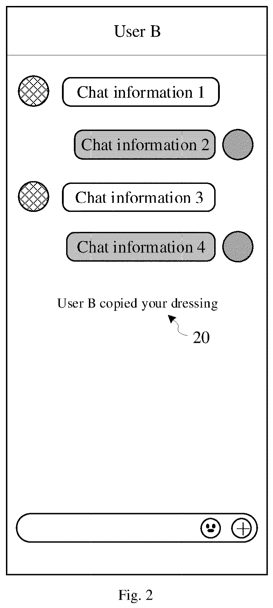

For example, as shown in Fig. 2 (in which, the copying prompt information is displayed in the form of non-chat information in the chat interface, and the preset attribute is a dressing attribute), when a user B (i.e., the second user) obtains attribute information (i.e., the first attribute information) of a preset attribute of an virtual character of a user A (i.e., the first user) by performing the attribute copying operation, the user A may receive copying prompt information 20, wherein the copying prompt information 20 may be displayed in a chat interface of the user A and the user B.

It can be understood that, when there are different attribute copying operations, copying prompt information may be sent when each attribute copying operation is received; or copying prompt information may also be sent only when a part of attribute copying operations are received. The copying prompt information sent when different attribute copying operations are received can be the same or different, and can be specifically set as needed.

In the interaction method provided by the embodiment, an attribute copying operation for a preset attribute of a first virtual character is received, the first virtual character being an virtual character of a first user; in response to the attribute copying operation, first attribute information of the first virtual character is obtained, wherein the first attribute information is attribute information of the preset attribute of the first virtual character, the first attribute information obtained is for use of a second virtual character of a second user, and the second user is a user performing the attribute copying operation. With the above technical solution, the present embodiment supports the user to obtain attribute information of an virtual character of another user as attribute information of the user's own virtual character, by performing the attribute copying operation, enriching the setting methods of the preset attribute of the virtual character, and simplifying the operation required for setting or modifying the preset attribute of the virtual character.

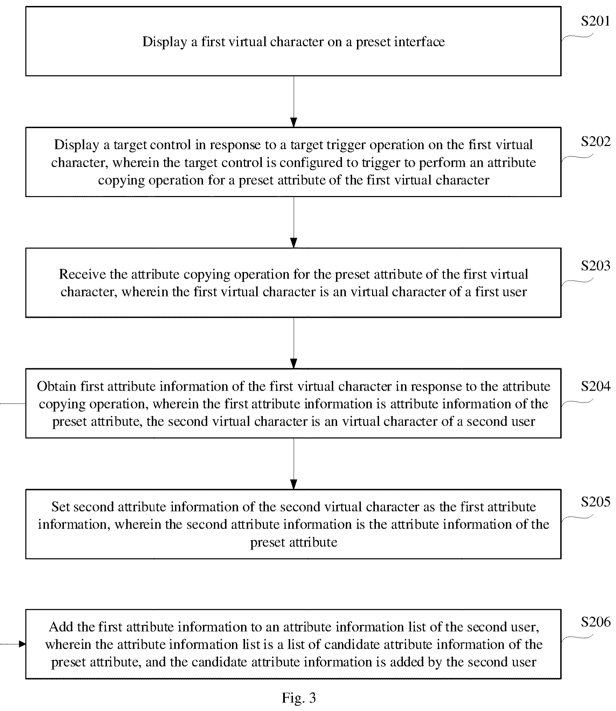

Fig. 3 is a schematic flowchart of another interaction method provided by the embodiment of the present disclosure. The solution in the embodiment may be combined with one or more of the alternative solutions in the embodiments described above. In some embodiments, after the obtaining of the first attribute information of the first virtual character, the interaction method further comprises at least one of: setting second attribute information of the second virtual character as the first attribute information, wherein the second attribute information is the attribute information of the preset attribute; or adding the first attribute information to an attribute information list of the second user, wherein the attribute information list is a list of candidate attribute information of the preset attribute, and the candidate attribute information is added by the second user.

In some embodiments, the interaction method provided by the embodiment further comprises: displaying the first virtual character on a preset interface; and displaying a target control in response to a target trigger operation on the first virtual character, wherein the target control is configured to trigger to perform the attribute copying operation for the preset attribute of the first virtual character.

Correspondingly, as shown in Fig. 3, the interaction method provided by the embodiment may comprise the following steps.

In step S201, a first virtual character is displayed on a preset interface.

The preset interface may be an interface on which the first virtual character is displayed, and may be any interface on which the first virtual character is displayed. For example, the preset interface may be a display interface or an interactive interface of the first virtual character, or a presentation interface of a target space of the second user, which can be set specifically as needed. The target space may be understood as a preset interactive space, and the target space of a certain user may be used to present an virtual character of the user and virtual characters of at least part of associated users of the user, so that the user can view and/or interact with the virtual characters of the at least part of associated users. The associated user may be understood as a user having a preset association relationship, such as a friend.

In the embodiment, the first virtual character may be displayed on the preset interface for the second user to view, for example, the preset interface may be displayed in response to a corresponding trigger operation of the second user, and the first virtual character of the first user may be displayed on the preset interface.

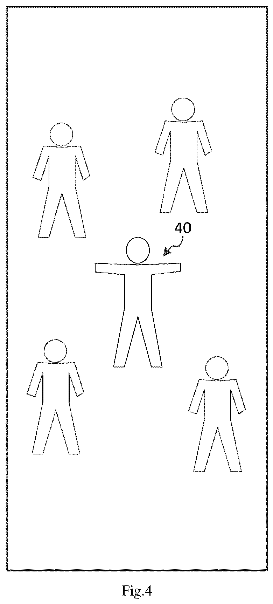

For example, as shown in Fig. 4 (where the dressing of the virtual characters is not shown), when the first user is an associated user of the second user, for example, when the first user is a friend of the second user, a target space of the second user may be displayed in a preset interface, a second virtual character 40 of the second user is displayed in the target space, and further, based on the setting of the second user, a virtual character of at least one associated user of the second user may be displayed in the target space, and the virtual character of the at least one associated user may comprise an virtual character corresponding to a subsequent attribute copying operation performed by the second user.

In step S202, a target control is displayed in response to a target trigger operation on the first virtual character, wherein the target control is configured to trigger to perform the attribute copying operation for the preset attribute of the first virtual character.

The target trigger operation may be a preset trigger operation for the first virtual character, such as a single-click or double-click operation on the first virtual character displayed in the preset interface. At this time, the first virtual character may be an virtual character triggered by the target trigger operation, for example, when a plurality of virtual characters are displayed in the preset interface, the first virtual character may be an virtual character corresponding to the target trigger operation among the plurality of virtual characters. The target control may be a control for a user to trigger to perform an attribute copying operation for a preset attribute of a corresponding virtual character, in other words, the user may trigger the target control corresponding to an virtual character to perform the attribute copying operation for the preset attribute of the virtual character.

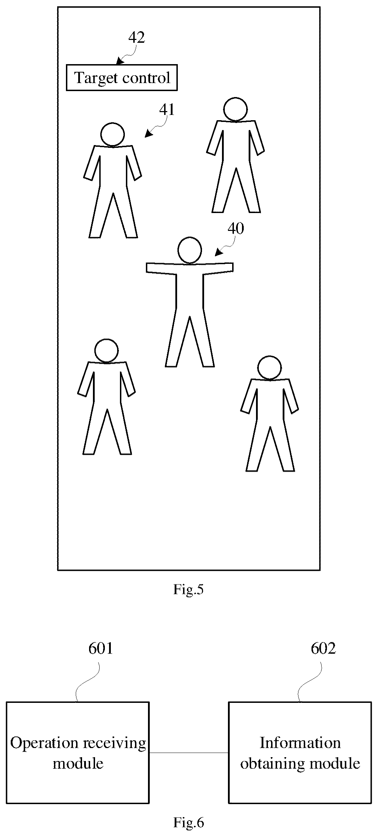

For example, when a target trigger operation for an virtual character 41 (e.g. a first virtual character) of an associated user in a preset interface is received, a target control 42 corresponding to the virtual character 41 may be displayed in response to the target trigger operation, such as displaying the target control 42 at a preset position of the preset interface, or displaying the target control 42 at an associated position of the virtual character 41, as shown in Fig. 5 (in which, the second user triggers the virtual character 41 displayed at the upper left corner of the preset interface), so that the second user performs an attribute copying operation for a preset attribute of the virtual character 41.

It may be understood that a number of the target control may be one or more. When the number of the target control is multiple, different target controls may be used to perform different attribute copying operations, and the different attribute copying operations may be used to indicate that the first attribute information is processed in different ways after being obtained.

In step S203, an attribute copying operation for a preset attribute of a first virtual character is received, wherein the first virtual character is an virtual character of a first user.

For example, the second user may perform the attribute copying operation for the preset attribute of the first virtual character by triggering the target control corresponding to the first virtual character. Correspondingly, when the current application detects that a second user triggers a target control corresponding to an virtual character, the virtual character can be taken as the first virtual character, and it is determined that an attribute copying operation for the first virtual character is received.

In step S204, first attribute information of the first virtual character is obtained in response to the attribute copying operation, and at least one of S205 or S206 is performed, wherein the first attribute information is attribute information of the preset attribute, the obtained first attribute information is for use by a second virtual character, the second virtual character is an virtual character of a second user, and the second user is a user performing the attribute copying operation.

In step S205, second attribute information of the second virtual character is set as the first attribute information, wherein the second attribute information is the attribute information of the preset attribute.

The second attribute information may be understood as attribute information of a preset attribute of the second virtual character.

For example, after the first attribute information of the first virtual character is obtained, the second attribute information of the second virtual character may be directly set as the first attribute information. Taking the preset attribute being a dressing attribute as an example, after first attribute information of the first virtual character is obtained, the second virtual character can be dressed according to the first attribute information, so that the second virtual character has the same dressing as the first virtual character.

In the embodiment, the attribute information of the preset attribute of the virtual character may be set as needed. In some embodiments, the attribute information of the preset attribute of an virtual character comprises clothing information, and the virtual character comprises the first virtual character and the second virtual character.

In some embodiments, a message image of the second user may be generated based on the attribute information of the preset attribute of the first virtual character, so that the user can leave a message by using the message image. At this time, after the second attribute information of the second virtual character is set as the first attribute information, the interaction method may further comprise: generating a message image having the second attribute information in response to a preset message operation of the second user, wherein the message image is used as a user identifier when the second user sends message information.

The preset message operation may be an operation for instructing to generate a message image of the second user, so that the second user sends message information by using the message image. For example, the preset message operation may be an anonymous message operation on a discussion interface of a certain interest topic, and at this time, the anonymous message operation may be configured to instruct to generate an anonymous message image of the second user, so that the second user leaves a message anonymously by using the anonymous message image.

Specifically, when receiving the preset message operation of the second user, a message image of the second user can be generated according to the current second attribute information of the second virtual character, so that the second user can send message information by using the message image.

In step S206, the first attribute information is added to an attribute information list of the second user, wherein the attribute information list is a list of candidate attribute information of the preset attribute, and the candidate attribute information is added by the second user.

The attribute information list may be a list of candidate attribute information of the preset attribute. The candidate attribute information may be attribute information to be selected and used by the second user, and the candidate attribute information may be added by the second user. For example, the second user may, after setting attribute items of the preset attribute of the second virtual character, add the set attribute information of the preset attribute to the attribute information list; the second user may also, after obtaining attribute information of the preset attribute of a virtual character of another user through the attribute copying operation, add the obtained preset attribute information to the attribute information list.

For example, after the first attribute information of the first virtual character is obtained, the first attribute information may be added to the attribute information list as candidate attribute information, for use by the second user when needed.

In the embodiment, the second user may select the candidate attribute information in the attribute information list for use as needed, for example, the second user may use any candidate attribute information in the attribute information list as the second attribute information of the second virtual character. At this time, the interaction method provided by the embodiment may further comprise: setting the second attribute information as target candidate attribute information in response to a setting operation for the target candidate attribute information in the attribute information list. The setting operation may be a trigger operation for instructing to set the second attribute information of the second virtual character as certain candidate attribute information in the attribute information list, such as an operation of clicking a finish control after selecting certain candidate attribute information in the attribute information list. The target candidate attribute information may be candidate attribute information corresponding to the setting operation, for example, candidate attribute information in a selected state in the attribute information list when the setting operation is received.

In some embodiments, it may be preset, after the first attribute information is obtained, whether to set the second attribute information of the second virtual character as the first attribute information, and whether to add the first attribute information to an attribute information list of the second user.

In some embodiments, it may be determined whether to set the second attribute information of the second virtual character as the first attribute information and to add the first attribute information to an attribute information list of the second user, based on the received attribute copying operation. For example, when a first attribute copying operation is received, such as when it is detected that the second user triggers a first target control corresponding to the first virtual character, the second attribute information of the second virtual character may be set as the first attribute information, and the first attribute information is added to an attribute information list of the second user; when a second attribute copying operation is received, such as when it is detected that the second user triggers a second target control corresponding to the first virtual character, the first attribute information may be added to the attribute information list of the second user without setting the second attribute information of the second virtual character as the first attribute information. The first target control and the second target control may be set as needed, for example, the first target control may be a copy control, and the second target control may be a save control.

According to the interaction method provided by the embodiment, based on the attribute copying operation of the user for the first virtual character, the second virtual character of the user is set to have the same preset attribute as the first virtual character and/or the attribute information of the preset attribute of the first virtual character is saved, for use by the second virtual character of the user, enriching the setting methods of the preset attribute, and simplifying the operation required by the user for setting the preset attribute of the virtual character of the user.

Fig. 6 is a block diagram of an interaction apparatus provided by an embodiment of the present disclosure. The apparatus can be implemented by software and/or hardware, can be configured in an electronic device, can be typically configured in a mobile phone or a tablet computer, and can set the preset attribute of the virtual character by executing the interaction method. As shown in Fig. 6, the interaction apparatus according to the embodiment may comprise: an operation receiving module 601 and an information obtaining module 602.

The operation receiving module 601 is configured to receive an attribute copying operation for a preset attribute of a first virtual character, wherein the first virtual character is an virtual character of a first user.

The information obtaining module 602 is configured to obtain first attribute information of the first virtual character for use of a second virtual character in response to the attribute copying operation, wherein the first attribute information is attribute information of the preset attribute, the second virtual character is an virtual character of a second user, and the second user is a user performing the attribute copying operation.

The interaction apparatus provided by the embodiment receives, by an operation receiving module, an attribute copying operation for a preset attribute of a first virtual character, the first virtual character being an virtual character of a first user; obtains, by an information obtaining module, in response to the attribute copying operation, first attribute information of the first virtual character, wherein the first attribute information is attribute information of the preset attribute of the first virtual character, the first attribute information obtained is for use of a second virtual character of a second user, and the second user is a user performing the attribute copying operation. With the above technical solution, the present embodiment supports the user to obtain attribute information of an virtual character of another user as attribute information of the user's own virtual character, by performing an attribute copying operation, enriching the setting methods of the preset attribute of the virtual character, and simplifying the operation required for setting or modifying the preset attribute of the virtual character.

In some embodiments, the interaction apparatus provided in the embodiment may further comprise one of: a first information setting module configured to, after the obtaining of the first attribute information of the first virtual character, set second attribute information of the second virtual character as the first attribute information, wherein the second attribute information is the attribute information of the preset attribute;; or an information adding module configured to, after the obtaining of the first attribute information of the first virtual character, add the first attribute information to an attribute information list of the second user, wherein the attribute information list is a list of candidate attribute information of the preset attribute, and the candidate attribute information is added by the second user.

In some embodiments, the interaction apparatus provided in the embodiment may further comprise: an image generation module configured to, after the setting of the second attribute information of the second virtual character as the first attribute information, generate a message image having the second attribute information, as a user identifier when the second user sends message information, in response to a preset message operation of the second user.

In some embodiments, the interaction apparatus provided in the embodiment may further comprise: a second information setting module configured to set the second attribute information as target candidate attribute information in response to a setting operation for the target candidate attribute information in the attribute information list.

In some embodiments, the interaction apparatus provided in the embodiment may further comprise: an prompt module configured to trigger to send copying prompt information to the first user in response to the attribute copying operation.

In the above solution, the copying prompt information may be displayed within a chat interface of the first user and the second user.

In some embodiments, the interaction apparatus provided in the embodiment may further comprise: a character display module configured to display the first virtual character on a preset interface;; a control display module configured to display a target control in response to a target trigger operation on the first virtual character, wherein the target control is configured to trigger to perform the attribute copying operation for the preset attribute of the first virtual character.

In the above solution, the attribute information of the preset attribute of the virtual character may comprise clothing information, and the virtual character may comprise the first virtual character and the second virtual character.

The interaction apparatus provided by the embodiment of the disclosure can execute the interaction method provided by any embodiment of the disclosure, and has corresponding functional modules and beneficial effects for executing the interaction method. For technical details not elaborated in the embodiment, reference may be made to the interaction method provided in any embodiment of the present disclosure.

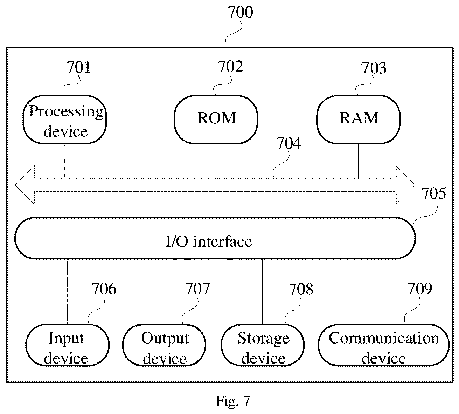

Referring now to Fig. 7, shown is a schematic structural diagram of an electronic device (e.g., a terminal device) 700 suitable for implementing the embodiments of the present disclosure. The terminal device in the embodiments of the present disclosure may comprise, but is not limited to, a mobile terminal such as a mobile phone, a notebook computer, a digital broadcast receiver, a PDA (Personal Digital Assistant), a PAD (tablet computer), a PMP (Portable Media Player), a car terminal (e.g., car navigation terminal), and the like, and a fixed terminal such as a digital TV, a desktop computer, and the like. The electronic device shown in Fig. 7 is only an example, and should not bring any limitation to the functions and the scope of use of the embodiments of the present disclosure.

As shown in Fig. 7, the electronic device 700 may comprise a processing device (e.g., a central processor, a graphics processor, etc.) 701, which may perform various appropriate actions and processes in accordance with programs stored in a Read-Only Memory (ROM) 702 or programs loaded from a storage device 708 into a Random Access Memory (RAM) 703. In the RAM 703, various programs and data necessary for the operation of the electronic device 700 are also stored. The processing device 701, the ROM 702, and the RAM 703 are connected to each other via a bus 704. An input/output (I/O) interface 705 is also connected to the bus 704.

Generally, the following devices may be connected to the I/O interface 705: an input device 706 comprising, for example, a touch screen, touch pad, keyboard, mouse, camera, microphone, accelerometer, gyroscope, or the like; an output device 707 comprising, for example, a Liquid Crystal Display (LCD), a speaker, a vibrator, or the like; the storage device 708, comprising, for example, magnetic tape, hard disk, etc.; and a communication device 709. The communication device 709 may allow the electronic device 700 to communicate with other devices, wireless or wired, to exchange data. While Fig. 7 illustrates an electronic device 700 having various devices, it is to be understood that not all illustrated devices are required to be implemented or provided. More or fewer devices may be alternatively implemented or provided.

In particular, the processes described above with reference to the flow charts may be implemented as computer software programs, according to the embodiments of the present disclosure. For example, the embodiments of the present disclosure comprise a computer program product comprising a computer program carried on a non-transitory computer readable medium, the computer program containing program code for performing the method illustrated by the flow chart. In such an embodiment, the computer program may be downloaded and installed from a network via the communication device 709, or may be installed from the storage device 708, or may be installed from the ROM 702. The computer program, when executed by the processing device 701, performs the above-described functions defined in the methods of embodiments of the present disclosure.

It should be noted that the computer readable medium of the present disclosure may be a computer readable signal medium or a computer readable storage medium or any combination of the two. The computer readable storage medium may be, for example, but not limited to, an electronic, magnetic, optical, electromagnetic, infrared, or semiconductor system, apparatus, or device, or any combination of the foregoing. More specific examples of the computer readable storage medium may comprise, but are not limited to: an electrical connection having one or more wires, a portable computer diskette, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the foregoing. In the present disclosure, the computer readable storage medium may be any tangible medium that can contain, or store a program for use by or in connection with an instruction execution system, apparatus, or device. In the present disclosure, the computer readable signal medium may comprise a propagated data signal with computer readable program code embodied therein, for example, in baseband or as part of a carrier wave. Such a propagated data signal may take any of a variety of forms, comprising, but not limited to, an electro-magnetic signal, an optical signal, or any suitable combination thereof. The computer readable signal medium may be any computer readable medium other than a computer readable storage medium, which can send, propagate, or transport a program for use by or in connection with an instruction execution system, apparatus, or device. Program code embodied on a computer readable medium may be transmitted using any appropriate medium, comprising but not limited to: electrical wires, optical cables, RF (Radio Frequency), etc., or any suitable combination of the foregoing.

In some embodiments, a client, server may communicate using any currently known or future developed network protocol, such as HTTP (HyperText Transfer Protocol), and may be interconnected with any form or medium of digital data communication (e.g., a communication network). Examples of communication networks comprise a Local Area Network ("LAN"), a Wide Area Network ("WAN"), an internet (e.g., the Internet), and a end-to-end network (e.g., ad hoc end-to-end network), as well as any currently known or future developed network.

The computer readable medium may be embodied in the electronic device; or may be separate and not assembled into the electronic device.

The computer readable medium carries one or more programs which, when executed by the electronic device, cause the electronic device to: receive an attribute copying operation for a preset attribute of a first virtual character, wherein the first virtual character is an virtual character of a first user; and obtain first attribute information of the first virtual character for use of a second virtual character in response to the attribute copying operation, wherein the first attribute information is attribute information of the preset attribute, the second virtual character is an virtual character of a second user, and the second user is a user performing the attribute copying operation.

Computer program code for carrying out operations of the present disclosure may be written in one or more programming languages or their combinations, the programming languages comprising but not limited to an object oriented programming language such as Java, Smalltalk, C++, further comprising conventional procedural programming languages, such as the "C" language or similar programming languages. The program code may execute entirely on the user's computer, partly on the user's computer, as a stand-alone software package, partly on the user's computer and partly on a remote computer or entirely on the remote computer or server. In the scenario in which a remote computer is involved, the remote computer may be connected to the user's computer through any type of network, comprising a Local Area Network (LAN) or a Wide Area Network (WAN), or may be connected to an external computer (for example, through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially in parallel, or the blocks may sometimes be executed in a reverse order, depending upon the functionality involved. It will also be noted that each block of the block diagrams and/or flowcharts, and combinations of blocks in the block diagrams and/or flowcharts, can be implemented by special purpose hardware-based systems that perform the specified functions or operations, or combinations of special purpose hardware and computer instructions.

The units described in the embodiments of the present disclosure may be implemented by software or hardware. The name of a unit does not in some cases constitute a limitation of the unit itself.

The functions described herein above may be performed, at least in part, by one or more hardware logic components. For example, without limitation, exemplary types of hardware logic components that may be used comprise: Field-Programmable Gate arrays (FPGAs), Application-Specific Integrated circuits (ASICs), Application-Specific Standard products (ASSPs), System On Chip (SOCs), Complex Programmable Logic Devices (CPLDs), and so forth.

In the context of the disclosure, a machine-readable medium may be a tangible medium that can contain, or store a program for use by or in connection with an instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus, or device, or any suitable combination of the foregoing. More specific examples of the machine-readable storage medium would comprise an electrical connection based on one or more wires, a portable computer diskette, a hard disk, a Random Access Memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, Example 1 provides an interaction method, comprising: receiving an attribute copying operation for a preset attribute of a first virtual character, wherein the first virtual character is an virtual character of a first user; and obtaining first attribute information of the first virtual character for use of a second virtual character in response to the attribute copying operation, wherein the first attribute information is attribute information of the preset attribute, the second virtual character is an virtual character of a second user, and the second user is a user performing the attribute copying operation.

According to one or more embodiments of the present disclosure, Example 2 of the method according to Example 1, after the obtaining of the first attribute information of the first virtual character, further comprises at least one of: setting second attribute information of the second virtual character as the first attribute information, wherein the second attribute information is the attribute information of the preset attribute; or adding the first attribute information to an attribute information list of the second user, wherein the attribute information list is a list of candidate attribute information of the preset attribute, and the candidate attribute information is added by the second user.

According to one or more embodiments of the present disclosure, Example 3 of the method according to Example 2, after the setting second attribute information of the second virtual character as the first attribute information, further comprises: after the setting of the second attribute information of the second virtual character as the first attribute information, generating a message image having the second attribute information, as a user identifier when the second user sends message information, in response to a preset message operation of the second user.

According to one or more embodiments of the present disclosure, Example 4 of the method according to Example 2, further comprises: setting the second attribute information as target candidate attribute information in response to a setting operation for the target candidate attribute information in the attribute information list.

According to one or more embodiments of the present disclosure, Example 5 of the method according to any of Examples 1-4, further comprises: triggering to send copying prompt information to the first user in response to the attribute copying operation.

According to one or more embodiments of the present disclosure, Example 6 of the method according to Example 5, the copying prompt information is displayed within a chat interface of the first user and the second user.

According to one or more embodiments of the present disclosure, Example 7 of the method according to any of Examples 1-4, further comprises: displaying the first virtual character on a preset interface; and displaying a target control in response to a target trigger operation on the first virtual character, wherein the target control is configured to trigger to perform the attribute copying operation for the preset attribute of the first virtual character.

According to one or more embodiments of the present disclosure, in Example 8 of the method according to any of Examples 1-4, the attribute information of the preset attribute of an virtual character comprises clothing information, and the virtual character comprises the first virtual character and the second virtual character.

According to one or more embodiments of the present disclosure, Example 9 provides an interaction apparatus, comprising: an operation receiving module configured to receive an attribute copying operation for a preset attribute of a first virtual character, wherein the first virtual character is an virtual character of a first user; and an information obtaining module configured to obtain first attribute information of the first virtual character for use of a second virtual character in response to the attribute copying operation, wherein the first attribute information is attribute information of the preset attribute, the second virtual character is an virtual character of a second user, and the second user is a user performing the attribute copying operation.

According to one or more embodiments of the present disclosure, Example 10 provides an electronic device, comprising: one or more processors; a memory configured to store one or more programs which, when executed by the one or more processors, cause the one or more processors to implement the interaction method according to any of Examples 1-8.

According to one or more embodiments of the present disclosure, Example 11 provides a computer-readable storage medium having stored thereon a computer program which, when executed by a processor, implements the interaction method according to any of Examples 1-8.

The foregoing description is illustration of the preferred embodiments of the present disclosure and the technical principles employed. It should be appreciated by those skilled in the art that the disclosure scope involved in the present disclosure is not limited to the technical solutions formed by specific combinations of the above technical features, but also encompasses other technical solutions formed by arbitrary combinations of the above technical features or equivalent features thereof without departing from the above disclosed concepts, for example, a technical solution formed by performing mutual replacement between the above features and technical features having similar functions to those disclosed (but not limited to) in the present disclosure.

Furthermore, while operations are depicted in a specific order, this should not be understood as requiring that these operations be performed in the specific order shown or in a sequential order. Under certain circumstances, multitasking and parallel processing may be advantageous. Similarly, while several specific implementation details are comprised in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the attached claims is not necessarily limited to the specific features or actions described above. Rather, the specific features and actions described above are only example forms of implementing the claims.

## Claims

1. An interaction method, comprising:
receiving an attribute copying operation for a preset attribute of a first virtual character, wherein the first virtual character is an virtual character of a first user; and
obtaining first attribute information of the first virtual character for use of a second virtual character in response to the attribute copying operation, wherein the first attribute information is attribute information of the preset attribute, the second virtual character is an virtual character of a second user, and the second user is a user performing the attribute copying operation.

2. The interaction method according to claim 1, after the obtaining of the first attribute information of the first virtual character, further comprising at least one of:
setting second attribute information of the second virtual character as the first attribute information, wherein the second attribute information is the attribute information of the preset attribute; or
adding the first attribute information to an attribute information list of the second user, wherein the attribute information list is a list of candidate attribute information of the preset attribute, and the candidate attribute information is added by the second user.

3. The interaction method according to claim 2, further comprising:
after the setting of the second attribute information of the second virtual character as the first attribute information, generating a message image having the second attribute information, as a user identifier when the second user sends message information, in response to a preset message operation of the second user.

4. The interaction method according to claim 2 or 3, further comprising:
setting the second attribute information as target candidate attribute information in response to a setting operation for the target candidate attribute information in the attribute information list.

5. The interaction method according to any of claims 1 to 4, further comprising:
triggering to send copying prompt information to the first user in response to the attribute copying operation.

6. The interaction method according to claim 5, wherein the copying prompt information is displayed within a chat interface of the first user and the second user.

7. The interaction method according to claim 5 or 6, wherein the copying prompt information is configured for the first user to confirm whether to authorize attribute information copying operation of the second user.

8. The interaction method according to any of claims 1 to 7, further comprising:
displaying the first virtual character on a preset interface; and
displaying a target control in response to a target trigger operation on the first virtual character, wherein the target control is configured to trigger to perform the attribute copying operation for the preset attribute of the first virtual character.

9. The interaction method according to any of claims 1 to 8, wherein the attribute information of the preset attribute of an virtual character comprises clothing information, and the virtual character comprises the first virtual character and the second virtual character.

10. The interaction method according to any of claims 1 to 9, wherein:
the second user is the same as the first user; or
the second user is different from the first user, and the second user has a preset association relationship with the first user.

11. The interaction method according to any of claims 1 to 10, wherein the second virtual character and the first virtual character are different virtual characters.

12. An interaction apparatus, comprising:
an operation receiving module configured to receive an attribute copying operation for a preset attribute of a first virtual character, wherein the first virtual character is an virtual character of a first user; and
an information obtaining module configured to obtain first attribute information of the first virtual character for use of a second virtual character in response to the attribute copying operation, wherein the first attribute information is attribute information of the preset attribute, the second virtual character is an virtual character of a second user, and the second user is a user performing the attribute copying operation.

13. An electronic device, comprising:
at least one processor; and
a memory in communication connection with the at least one processor, wherein the memory stores computer instructions executable by the at least one processor, which when executed by the at least one processor, cause the at least one processor to perform the interaction method according to any of claims 1 to 11.

14. A computer-readable storage medium having stored thereon computer instructions which, when executed by a processor, implements the interaction method according to any of claims 1 to 11.

15. A computer program, comprising:
instructions which, when executed by a processor, implement the interaction method according to according to any of claims 1 to 11.

16. A computer program product, comprising:
instructions which, when executed by a processor, implement the interaction method according to according to any of claims 1 to 11.
